# EUROPÄISCHE PATENTSCHRIFT

(11) **EP 0 802 097 B1**
(45) Veröffentlichungstag und Bekanntmachung des Hinweises auf die Patenterteilung: **04.10.2001**
(21) Anmeldenummer: 97106591.7
(22) Anmeldetag: 21.04.1997
(51) Int. Cl.: B60R 22/24

(54) **Dreipunkt-Sicherheitsgurtsystem**
Three point safety belt system
Système de ceinture de sécurité à trois points

(30) Priorität: 19.04.1996 DE 19615625; 03.07.1996 DE 19626800
(43) Veröffentlichungstag der Anmeldung: 22.10.1997
(60) Teilanmeldung: 01103450.1
(73) Patentinhaber: TAKATA (EUROPE) VEHICLE SAFETY TECHNOLOGY GmbH, D-89081 Ulm (DE)
(72) Erfinder: Kopetzky, Robert, 89173 Lonsee (DE); Pleyer, Matthias, 89250 Senden (DE); Dreizler, Sabine, 89073 Ulm (DE)
(74) Vertreter: Manitz, Gerhart, Dr.

(56) Entgegenhaltungen:
- EP-A- 0 078 940
- DE-A- 3 008 371
- DE-A- 3 041 103
- DE-U- 29 502 192
- US-A- 4 327 881

## Beschreibung

Die vorliegende Erfindung betrifft ein Dreipunkt-Sicherheitsgurtsystem, insbesondere für Kraftfahrzeugsitze, mit einem von einer Rolle abwickelbaren Sicherheitsgurt, der über eine seitlich oberhalb des Sitzes angeordnete Umlenkeinrichtung geführt ist, welche eine Durchtrittsöffnung aufweist, deren untere Begrenzung durch eine Umlenkrolle für den Sicherheitsgurt gebildet wird.

Die in Kraftfahrzeugen üblichen Dreipunkt-Sicherheitsgurtsysteme weisen eine Rolle auf, von welcher der Sicherheitsgurt abwickelbar ist. Diese Rolle ist insbesondere bei Sicherheitsgurten für die Vordersitze eines Personenwagens seitlich des zugehörigen Sitzes im Bodenbereich an der sogenannten B-Säule angeschlagen. Ausgehend von dieser Rolle ist der Gurt über eine seitlich oberhalb des Sitzes an der B-Säule angeordnete Umlenkeinrichtung und von dort wieder zurück zu einem zweiten bodennahen Befestigungsbeschlag für das rollenferne Ende des Gurtes geführt. Zwischen der Umlenkeinrichtung und dem zweiten bodennahen Befestigungsbeschlag ist der Sicherheitsgurt durch die Durchführung eines Riegelelements geführt, welches mit einem auf der anderen Seite des zugehörigen Sitzes angeordneten Gurtschloß zusammenwirkt.

Beim Auf- und Abwickeln eines solchen Sicherheitsgurtes wird das Gurtband durch die Durchtrittsöffnung der Umlenkeinrichtung gezogen. Um die hierbei auftretende, das Gurtband belastende und damit zu einem Verschleiß führende Reibung möglichst gering zu halten, ist es bereits bekannt, in der Umlenkeinrichtung eine Umlenkrolle vorzusehen, über welche der Sicherheitsgurt geführt ist. Diese Umlenkrolle ist in der Umlenkeinrichtung so angeordnet, daß sie die untere Begrenzung der Durchtrittsöffnung bildet. Der Mantel der einen entsprechend großen Durchmesser aufweisenden Umlenkrolle bildet somit die Umlenkfläche für den Sicherheitsgurt. Das von unten von der Abwickelrolle nachgelieferte und im wesentlichen auch nach unten abgezogene Gurtband kann dadurch weitgehend reibungsfrei geführt werden.

Aufgrund des Anschlages der Umlenkeinrichtung an der B-Säule befindet sich die Umlenkeinrichtung in bezug auf den zugehörigen Fahrzeugsitz jedoch in einer rückwärtigen Position. Der auf das Gurtband zum Anlegen ausgeübte Zug weist daher eine in Fahrtrichtung gesehen nach vorne gerichtete Kraftkomponente auf, die dazu führt, daß der Sicherheitsgurt auf der Umlenkrolle zu einer Seite der Durchführung hin wandert und an der dortigen seitlichen Begrenzung anstößt. Ebenso kommt es vor, daß beim Aufwickeln des Gurtbandes auf die Rolle der Sicherheitsgurt in Richtung auf die andere seitliche Begrenzung der Durchtrittsöffnung wandert und an die dortige seitliche Begrenzung anstößt. Der Gurt reibt daher an diesen seitlichen Begrenzungen, was zu einem Verschleiß und einer vorzeitigen Alterung des Gurtes führen kann, die möglicherweise sogar die einwandfreie Funktion des Sicherheitsgurtes gefährdet, da die Gefahr besteht, daß der Gurt seitlich einreißt. Zudem ist das Abziehen des Gurtbandes noch nicht optimal leicht.

Ein Dreipunkt-Sicherheitsgurtsystem der eingangs genannten Art ist aus der DE-U-295 02 192 bekannt. Bei diesem bekannten System umfaßt die Umlenkeinrichtung einen U-förmigen Bügel und eine auf den parallelen Schenkeln des Bügels drehbar gelagerte Rolle. Die Rolle besteht aus einem zylindrischen Hauptabschnitt und zwei trompetenförmig erweiterten Endabschnitten, die einen stetig konkav gekrümmten Übergang zwischen dem zylindrischen Hauptabschnitt der Rolle und der Innenfläche des betreffenden Schenkels des Bügels bilden. Dadurch soll das Gurtband an der betreffenden Längskante lediglich leicht und stetig gekrümmt und dadurch ein leichtgängiger Lauf des Gurtbandes gewährleistet werden.

Der Erfindung liegt die Aufgabe zugrunde, ein Dreipunkt-Sicherheitsgurtsystem der eingangs genannten Art so weiterzubilden, daß das Abziehen des Gurtbandes erleichtert und eine Beeinträchtigung oder Zerstörung desselben verhindert wird.

Diese Aufgabe wird dadurch gelöst, daß die Umlenkeinrichtung als weitere Rolle mindestens eine zur Umlenkrolle im wesentlichen senkrechte Führungsrolle aufweist, welche die Durchtrittsöffnung seitlich begrenzt. Durch eine solche zusätzliche Führungsrolle wird erreicht, daß der zu einer seitlichen Begrenzung der Durchtrittsöffnung der Umlenkeinrichtung wandernde Gurt an dieser seitlichen Begrenzung nicht gerieben wird. Stattdessen setzt das Gurtband die dort vorhandene zusätzliche Führungsrolle in Bewegung, wodurch eine deutliche Verringerung des Abzugwiderstandes und des Verschleißes des Gurtbandes erreicht wird. Um sowohl beim Abwickeln als auch beim Aufwickeln den Verschleiß der beiden seitlichen Randbereiche des Gurtbandes zu verringern, sind bevorzugt zwei zusätzliche Führungsrollen vorgesehen, welche die Durchtrittsöffnung der Umlenkeinrichtung beidseits der Umlenkrolle begrenzen.

Nach einer weiteren Ausgestaltung der Erfindung schließt der Mantel der seitlichen Führungsrollen unmittelbar an den Mantel der Umlenkrolle an. Hierdurch wird sichergestellt, daß die jeweilige seitliche Führungsrolle von dem zu dieser Seite hin laufenden Gurt sofort in Drehung versetzt wird. Auch wird verhindert, daß der Gurt in einen Spalt gezogen wird.

Die Mantelfläche der seitlichen Rollen ist jeweils bevorzugt konkav ausgebildet. Dies gewährleistet in besonders vorteilhafter Weise, daß der Gurt stoß- und knickfrei auf die seitliche Rolle aufläuft.

Eine weitere Ausgestaltung der Erfindung ist dadurch gekennzeichnet, daß die untere Begrenzung der Durchtrittsöffnung durch eine Umlenkfläche gebildet wird, und daß ein Teil der Umlenkfläche durch den Mantel mindestens einer Umlenkrolle gebildet wird.

Es hat sich gezeigt, daß die Verwendung einer Umlenkfläche mit mindestens einer eingesetzten Umlenkrolle ein verhältnismäßig leichtes Abziehen des Gurtbandes ermöglicht. Vorteilhaft ist es dabei, wenn die Umlenkfläche in Durchtrittsrichtung des Gurtbandes sanft gekrümmt ist und die Umlenkrollen einen gegenüber dem Krümmungsradius der Umlenkfläche kleineren Krümmungsradius aufweisen. Die sanft gekrümmte Umlenkfläche verhindert eine zu starke Biegung des Gurtbandes in der Umlenkeinrichtung, wodurch das Abziehen erschwert würde. Durch die verhältnismäßig kleinen Umlenkrollen wird andererseits ein leichter Lauf der Umlenkrollen gewährleistet, wodurch ebenfalls das Abziehen des Gurtbandes erleichtert wird.

Nach einer weiteren Ausgestaltung der Erfindung sind die Umlenkrollen über die Umlenkfläche verteilt angeordnet, wobei bevorzugt insgesamt zwei oder drei zueinander im wesentlichen parallele Umlenkrollen vorgesehen sind. Die Verwendung von zwei bzw. drei Umlenkrollen hat sich als besonders vorteilhaft herausgestellt, da die zwei bzw. drei Rollen, insbesondere wenn diese über die Umlenkfläche verteilt angeordnet sind, einerseits eine sehr geringe Reibung beim Durchziehen des Gurtbandes gewährleisten und andererseits nur ein geringer Rollwiderstand gegeben ist. Darüber hinaus ist die Ausgestaltung mit zwei bzw. drei Rollen kostengünstig ausführbar.

Nach einer weiteren Ausgestaltung der Erfindung ist zur Lagerung der seitlichen Rollen und/oder der Umlenkrollen jeweils ein Gleitlager vorgesehen. Dies ist herstellungstechnisch unaufwendig und daher kostengünstig.

Bevorzugt sind die Umlenkrollen und die seitlichen Rollen in einem Kunststoffteil gelagert, welches mantelartig auf ein bevorzugt aus Metall bestehendes Bügelteil aufsetzbar ist. Auch dies vereinfacht und verbilligt die Herstellung, da die Lagermittel für alle Rollen in dem Kunststoffteil ausgebildet sein können. Das bevorzugt aus Metall oder auch aus einem anderen stabilen Material bestehende Bügelteil sorgt dabei für eine ausreichend feste Verankerung des Sicherheitsgurtes im Falle einer starken Belastung, wie sie bei einem Unfall auftritt.

Nach einer weiteren Ausgestaltung der Erfindung sind die Lager für die Umlenkrollen und die seitlichen Führungsrollen durch mindestens ein bevorzugt aufklipsbares Abdeckteil abdeckbar. Diese Ausgestaltung vereinfacht die Montage der erfindungsgemäßen Anordnung, da die Rollen einfach in das Kunststoffteil eingesetzt werden können und anschließend nur noch das Abdeckteil aufgeklipst werden muß.

Die Mantelflächen der Umlenkrollen und/oder der seitlichen Führungsrollen können nach einer weiteren Ausgestaltung der Erfindung glatt ausgebildet sein. Nach einer anderen Ausgestaltung der Erfindung ist es aber auch möglich, die Mantelflächen strukturiert auszubilden, um die Wanderbewegung des Gurtbandes zu den seitlichen Begrenzungen der Durchtrittsöffnung in der Umlenkeinrichtung zu beeinflussen.

Ein Ausführungsbeispiel der Erfindung ist in der Zeichnung dargestellt und wird nachfolgend beschrieben. Es zeigen, jeweils in schematischer Darstellung:
- Fig. 1: eine perspektivische Darstellung des erfindungsgemäßen Sicherheitsgurtsystems,
- Fig. 2: ein Detail von Fig. 1 in vergrößerter Explosionsdarstellung,
- Fig. 3: eine Draufsicht auf die Umlenkeinrichtung einer Variante des erfindungsgemäßen Sicherheitsgurtsystems,
- Fig. 4: einen Querschnitt durch die Umlenkeinrichtung von Fig. 3, und
- Fig. 5: eine perspektivische Darstellung der Umlenkeinrichtung einer weiteren Variante des erfindungsgemäßen Sicherheitsgurtsystems.

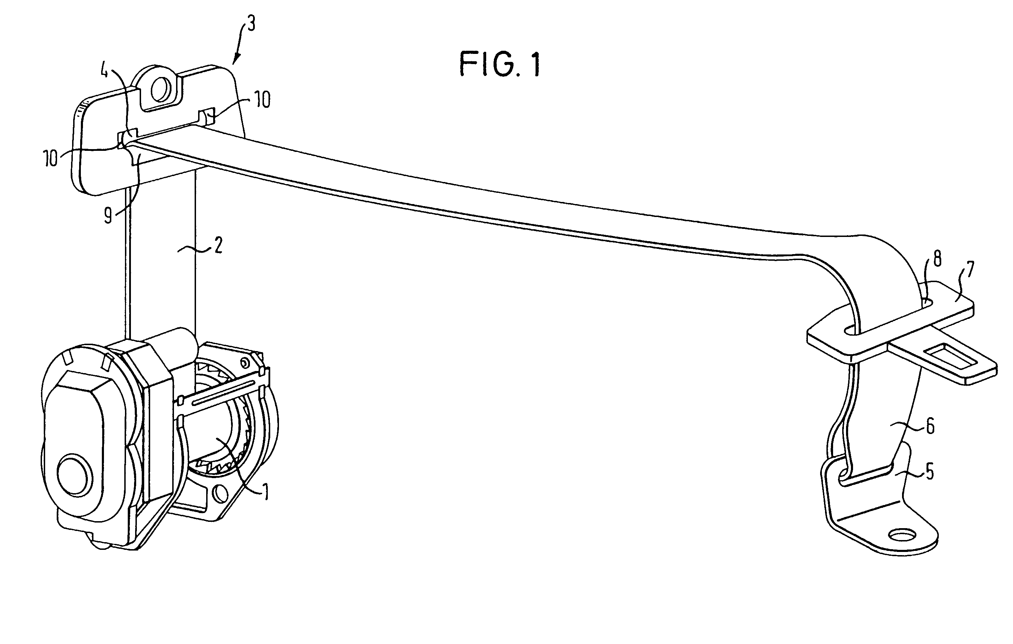

Fig. 1 zeigt die wesentlichen Teile des erfindungsgemäßen Dreipunkt-Sicherheitsgurtsystems, nämlich eine Rolle 1, von welcher der Sicherheitsgurt 2 abwickelbar ist, eine obere Umlenkeinrichtung 3 mit einer Durchtrittsöffnung 4, durch welche der Sicherheitsgurt 2 geführt ist, einen unteren Befestigungsbeschlag 5 für das rollenferne Ende 6 des Sicherheitsgurtes 2 sowie ein Riegelelement 7 mit einer Durchführung 8 für den Sicherheitsgurt 2, welches zwischen oberer Umlenkeinrichtung 3 und unterem Befestigungsbeschlag 5 vorgesehen ist. Das Riegelelement 7 wirkt mit einem hier nicht dargestellten Gurtschloß auf der der Rolle 1 abgewandten Seite des zugehörigen Fahrzeugsitzes, der hier ebenfalls nicht dargestellt ist, zusammen.

Die obere Umlenkeinrichtung 3 weist eine Umlenkrolle 9 auf, welche die Durchtrittsöffnung 4 der Umlenkeinrichtung 3 nach unten hin begrenzt. Zusätzlich zu der Umlenkrolle 9 sind in der Umlenkeinrichtung 3 zwei seitliche Rollen 10 vorgesehen, welche die Durchtrittsöffnung 4 der Umlenkeinrichtung 3 seitlich begrenzen. Der von unten der Umlenkeinrichtung 3 zugeführte und schräg nach unten und vorne abgezogene Sicherheitsgurt 2 wird auf diese Weise weitgehend reibungsfrei durch die Durchtrittsöffnung 4 der Umlenkeinrichtung 3 geführt.

Wandert der Sicherheitsgurt beim Abwickeln oder Aufrollen zu einer Seite der Durchtrittsöffnung 4 der Umlenkeinrichtung 3 hin, so läuft er auf eine der mit konkaver Mantelfläche ausgebildeten seitlichen Rollen 10 auf, so daß er auch seitlich weitgehend reibungsfrei durch die Durchtrittsöffnung 4 der Umlenkeinrichtung 3 geführt wird. Aufgrund der konkaven Mantelfläche der seitlichen Rollen 10, die zudem bündig an den Mantel der Umlenkrolle 9 anschliessen, ist dabei auch gewährleistet, daß der Sicherheitsgurt 2 stoß- und knickfrei auf die seitlichen Rollen 10 aufläuft. Die Belastung des Gurtbandes wird dadurch sehr stark herabgesetzt, so daß die Belastung der seitlichen Randbereiche des Gurtbandes und die damit verbundene Gefahr eines Einreißens entsprechend verringert ist.

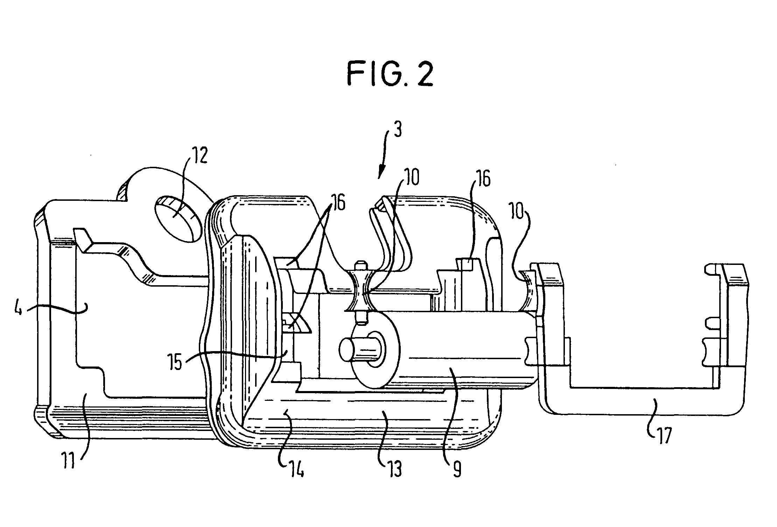

In Fig. 2 ist die Ausgestaltung der Umlenkeinrichtung 3 im einzelnen dargestellt. Auf ein bevorzugt aus Metall bestehendes Bügelteil 11 mit einer Durchführung 12 für einen hier nicht dargestellten Beschlagbolzen zur Befestigung der Umlenkeinrichtung am Kraftfahrzeug ist ein zweiteilig ausgebildetes Gehäuse 13 aufgesetzt. Das Gehäuse 13 besteht aus einem auf das Bügelteil 11 aufbringbaren Mantelteil 14, in welchem die Lager 15 und 16 für die Umlenkrolle 9 und die seitlichen Führungsrollen 10 ausgebildet sind. Das zweite Gehäuseteil ist als aufklipsbares Abdeckteil 17 ausgebildet, welches die Lager 15 und 16 der Umlenkrolle 9 und der seitlichen Führungsrollen 10 nach vorne hin abdeckt. Durch diese Ausgestaltung sind die Umlenkrolle 9 und die seitlichen Führungsrollen 10 einfach von vorne in die zugehörigen Lager 15 und 16 einsetzbar und werden dort durch das einfach aufklipsbare Abdeckteil 17 sicher gehalten. Durch diese Ausgestaltung sind sowohl Herstellung als auch Zusammenbau der Umlenkeinrichtung 3 vereinfacht.

Die bei einem Unfall von der Umlenkeinrichtung 3 aufzunehmende Kraft wird von dem bevorzugt aus Metall gebildeten Bügelteil 11 an das Kraftfahrzeug abgeleitet. Das Kunststoffteil 13 muß dagegen nur die beim normalen Betrieb des Sicherheitsgurts 2 auftretenden Kräfte aufnehmen.

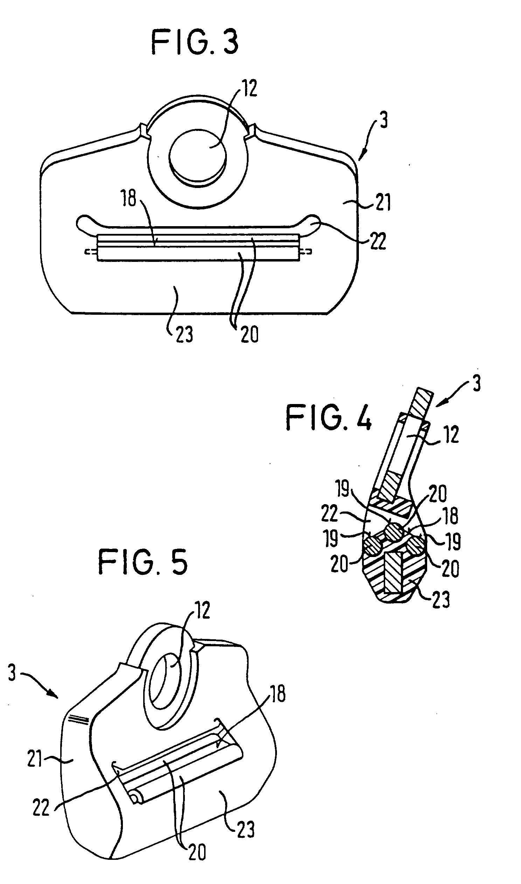

In den Fig. 3 bis 5 ist jeweils lediglich die Umlenkeinrichtung 3 zweier weiterer Varianten des erfindungsgemäßen Sicherheitsgurtsystems gezeigt. Die seitlichen Führungsrollen wurden der Übersichtlichkeit halber weggelassen. Die Umlenkeinrichtung 3 besteht dabei jeweils aus einem kunststoffumhüllten, metallenen Bügel 21, welcher eine Durchtrittsöffnung 22 für das Gurtband 2 aufweist.

Die untere Begrenzung der Durchtrittsöffnung 22 wird jeweils durch eine in Durchtrittsrichtung des Gurtbandes 2 sanft gekrümmte Umlenkfläche 18 gebildet, in die Umlenkrollen 20 derart eingesetzt sind, daß die Mäntel 19 der Umlenkrollen 20 jeweils einen Teil der Umlenkfläche 18 bilden. Der zwischen den Mänteln 19 der Umlenkrollen 20 verbleibende Teil der Umlenkfläche 18 wird durch die zugeordnete untere Querstrebe 23 des Bügels 21 gebildet.

Bei der in den Fig. 3 und 4 dargestellten Variante sind drei zueinander parallele Umlenkrollen 20 vorgesehen, von denen jeweils eine an dem gurtein- und austrittsseitigen Ende der Umlenkfläche 18 angeordnet ist, während die dritte Umlenkrolle 20 in der Mitte der Umlenkfläche 18 vorgesehen ist, also mit ihrem Mantel 19 den Scheitelpunkt der gekrümmten Umlenkfläche 18 bildet.

Bei der in Fig. 5 dargestellten Variante sind zwei zueinander parallele Umlenkrollen 20 vorgesehen, die jeweils in etwa am gurtein- und austrittsseitigen Ende der Durchtrittsöffnung 22 angeordnet sind. Auch durch diese Anordnung wird eine Umlenkung des Gurtbandes 2 mit sanfter Krümmung ermöglicht.

Bei beiden Varianten sind die Krümmungsradien der in dem Bügel 21 gelagerten Umlenkrollen 20 gegenüber dem Krümmungsradius der Umlenkfläche 18 kleiner, so daß der Rollwiderstand der Umlenkrollen 20 ebenfalls klein ist. Durch die verteilte Anordnung der zwei oder drei Umlenkrollen 20 über die Umlenkfläche 18 wird ein geringer Abzugswiderstand des Gurtbandes 2 erreicht. Grundsätzlich können auch mehr als drei oder auch nur eine einzige Umlenkrolle mit kleinem Krümmungsradius vorgesehen sein. Bei nur einer einzigen Umlenkrolle befindet sich diese bevorzugt in der Mitte der Umlenkfläche 18, bildet also deren Scheitelpunkt.

Auf kostengünstige Weise wird durch das erfindungsgemäße Sicherheitsgurtsystem der Abzugswiderstand des Gurtbandes 2 gering gehalten und der Verschleiß des Gurtbandes 2 deutlich reduziert. Durch die seitlichen Führungsrollen 10 wird die Gefahr eines seitlichen Einreißens des Gurtbandes 2 verringert, welches bei bekannten Gurtbändern durch Schaben des Gurtbandes an den feststehenden Kanten auftritt.

## Patentansprüche

1. Dreipunkt-Sicherheitsgurtsystem, insbesondere für Kraftfahrzeugsitze, mit einem von einer Rolle (1) abwickelbaren Sicherheitsgurt (2), der über eine seitlich oberhalb des Sitzes angeordnete Umlenkeinrichtung (3) geführt ist, welche eine Durchtrittsöffnung (4) aufweist, deren untere Begrenzung durch eine Umlenkrolle (9) für den Sicherheitsgurt (2) gebildet wird,
**dadurch gekennzeichnet,**
**daß** die Umlenkeinrichtung (3) als weitere Rolle mindestens eine zur Umlenkrolle (9) im wesentlichen senkrechte Führungsrolle (10) aufweist, welche die Durchtrittsöffnung (4) seitlich begrenzt.

2. Dreipunkt-Sicherheitsgurtsystem nach Anspruch 1,
**dadurch gekennzeichnet,**
**daß** zwei zusätzliche Führungsrollen (10) vorgesehen sind, welche die Durchtrittsöffnung (4) der Umlenkeinrichtung (3) beidseits begrenzen.

3. Dreipunkt-Sicherheitsgurtsystem nach Anspruch 1 oder 2,
**dadurch gekennzeichnet,**
**daß** der Mantel der seitlichen Führungsrollen (10) jeweils unmittelbar an den Mantel der Umlenkrolle (9) anschließt.

4. Dreipunkt-Sicherheitsgurtsystem nach einem der vorhergehenden Ansprüche,
**dadurch gekennzeichnet,**
**daß** die Mantelfläche der seitlichen Führungsrollen (10) jeweils konkav ausgebildet ist.

5. Dreipunkt-Sicherheitsgurtsystem nach einem der vorhergehenden Ansprüche,
**dadurch gekennzeichnet,**
**daß** die untere Begrenzung der Durchtrittsöffnung (4) durch eine Umlenkfläche (18) gebildet wird, und daß ein Teil der Umlenkfläche (18) durch den Mantel (19) mindestens einer Umlenkrolle (20) gebildet wird.

6. Dreipunkt-Sicherheitsgurtsystem nach Anspruch 5,
**dadurch gekennzeichnet,**
**daß** die Umlenkfläche (18) in Durchtrittsrichtung des Gurtbandes (2) sanft gekrümmt ist.

7. Dreipunkt-Sicherheitsgurtsystem nach Anspruch 6,
**dadurch gekennzeichnet,**
**daß** die Umlenkrollen (20) einen im Verhältnis zum Krümmungsradius der Umlenkfläche (18) kleineren Krümmungsradius aufweisen.

8. Dreipunkt-Sicherheitsgurtsystem nach Anspruch 7,
**dadurch gekennzeichnet,**
**daß** die Umlenkrollen (20) über die Umlenkfläche (18) verteilt angeordnet sind.

9. Dreipunkt-Sicherheitsgurtsystem nach einem der Ansprüche 5 bis 8,
**dadurch gekennzeichnet,**
**daß** insgesamt zwei oder drei zueinander im wesentlichen parallele Umlenkrollen (20) vorgesehen sind.

10. Dreipunkt-Sicherheitsgurtsystem nach einem der vorhergehenden Ansprüche,
**dadurch gekennzeichnet,**
**daß** zur Lagerung der seitlichen Führungsrollen (10) und/oder der Umlenkrollen (9) jeweils Gleitlager (15, 16) vorgesehen sind.

11. Dreipunkt-Sicherheitsgurtsystem nach einem der vorhergehenden Ansprüche,
**dadurch gekennzeichnet,**
**daß** die Umlenkrollen (9) und die seitlichen Führungsrollen (10) in einem Kunststoffteil (13) gelagert sind, welches mantelartig auf ein bevorzugt aus Metall bestehendes Bügelteil (11) aufbringbar ist.

12. Dreipunkt-Sicherheitsgurtsystem nach Anspruch 11,
**dadurch gekennzeichnet,**
**daß** die Lager (15, 16) der Umlenkrollen (9) und der seitlichen Führungsrollen (10) durch mindestens ein bevorzugt aufklipsbares Abdeckteil (17) abdeckbar sind.

13. Dreipunkt-Sicherheitsgurtsystem nach einem der vorhergehenden Ansprüche,
**dadurch gekennzeichnet,**
**daß** die Mantelflächen der Umlenkrollen (9, 20) und/oder der seitlichen Führungsrollen (10) glatt ausgebildet sind.

14. Dreipunkt-Sicherheitsgurtsystem nach einem der Ansprüche 1 bis 12,
**dadurch gekennzeichnet,**
**daß** die Mantelflächen der Umlenkrollen (9, 20) und/oder der seitlichen Führungsrollen (10) strukturiert sind.

## Claims

1. Three-point safety belt system, in particular for motor vehicle seats, comprising a safety belt (2) which can be unwound from a reel (1) and which is guided via a deflection device (3) arranged laterally above the seat and having a passage opening (4), with the lower boundary of the passage opening being formed by a deflection roller (9) for the safety belt (2), **characterised in that** the deflection device (3) has at least one guide roller (10) extending substantially perpendicular to the deflection roller (9) and laterally bounding the passage opening (4) as the further roller.

2. Three-point safety belt system in accordance with claim 1, **characterised in that** two additional guide rollers (10) are provided which bound both sides of the passage opening (4) of the deflection device (3).

3. Three-point safety belt system in accordance with claim 1 or claim 2, **characterised in that** the jacket of the lateral guide rollers (10) in each case directly adjoins the jacket of the deflection roller (9).

4. Three-point safety belt system in accordance with any one of the preceding claims, **characterised in that** the jacket surface of the lateral guide rollers (10) is in each case made concave.

5. Three-point safety belt system in accordance with any one of the preceding claims, **characterised in that** the lower boundary of the passage opening (4) is formed by a deflection surface (18), and **in that** a part of the deflection surface (18) is formed by the jacket (19) of at least one deflection roller (20).

6. Three-point safety belt system in accordance with claim 5, **characterised in that** the deflection surface (18) is gently curved in the passage direction of the belt (2).

7. Three-point safety belt system in accordance with claim 6, **characterised in that** the deflection rollers (20) have a smaller radius of curvature in comparison to the radius of curvature of the deflection surface (18).

8. Three-point safety belt system in accordance with claim 7, **characterised in that** the deflection rollers (20) are arranged distributed over the deflection surface (18).

9. Three-point safety belt system in accordance with any one of the claims 5 to 8, **characterised in that** a total of two or three deflection rollers (20) which are substantially parallel to one another are provided.

10. Three-point safety belt system in accordance with any one of the preceding claims, **characterised in that** in each case a plain bearing (15, 16) is provided for the journalling of the lateral guide rollers (10) and/or of the deflection rollers (9).

11. Three-point safety belt system in accordance with any one of the preceding claims, **characterised in that** the deflection rollers (9) and the lateral guide rollers (10) are journalled in a plastic part (13) which can be attached in the manner of a jacket onto a hoop part (11) preferably consisting of metal.

12. Three-point safety belt system in accordance with claim 11, **characterised in that** the bearings (15, 16) of the deflection rollers (9) and of the lateral guide rollers (10) can be covered over by at least one cover part (17) which can preferably be clipped on.

13. Three-point safety belt system in accordance with any one of the preceding claims, **characterised in that** the jacket surfaces of the deflection rollers (9, 20) and/or of the lateral guide rollers (10) are made smooth.

14. Three-point safety belt system in accordance with any one of the claims 1 to 12, **characterised in that** the jacket surfaces of the deflection rollers (9, 20) and/or of the lateral guide rollers (10) are structured.

## Revendications

1. Système de ceinture de sécurité à trois points, en particulier pour siège de véhicule automobile, comprenant une ceinture de sécurité (2), susceptible d'être déroulée depuis une bobine (1) et guidée via un dispositif de renvoi (3) agencé latéralement au-dessus du siège, lequel comporte une ouverture traversante (4) dont la délimitation inférieure est formée par un rouleau de renvoi (9) pour la ceinture de sécurité (2),
**caractérisé en ce que** le dispositif de renvoi (3) comprend, à titre d'autres rouleaux, au moins un rouleau de guidage (10) sensiblement perpendiculaire au rouleau de renvoi (9) et délimitant latéralement l'ouverture traversante (4).

2. Système de ceinture de sécurité à trois points selon la revendication 1,
**caractérisé en ce qu'**il est prévu deux rouleaux de guidage additionnels (10) qui délimitent l'ouverture traversante (4) du dispositif de renvoi (3) sur les deux côtés.

3. Système de ceinture de sécurité à trois points selon l'une ou l'autre des revendications 1 et 2,
**caractérisé en ce que** l'enveloppe des rouleaux de guidage latéraux (10) fait respectivement immédiatement suite à l'enveloppe du rouleau de renvoi (9).

4. Système de ceinture de sécurité à trois points selon l'une des revendications précédentes,
**caractérisé en ce que** la surface enveloppe des rouleaux de guidage latéraux (10) est réalisée respectivement sous forme concave.

5. Système de ceinture de sécurité à trois points selon l'une des revendications précédentes,
**caractérisé en ce que** la délimitation inférieure de l'ouverture traversante (4) est formée par une surface de renvoi (18), et **en ce qu'**une partie de la surface de renvoi (18) est formée par l'enveloppe (19) d'au moins un rouleau de renvoi (20).

6. Système de ceinture de sécurité à trois points selon la revendication 5,
**caractérisé en ce que** la surface de renvoi (18) est incurvée de manière douce dans la direction de traversée de la bande de ceinture (2).

7. Système de ceinture de sécurité à trois points selon la revendication 6,
**caractérisé en ce que** les rouleaux de renvoi (20) présentent un rayon de courbure plus petit en relation au rayon de courbure de la surface de renvoi (18).

8. Système de ceinture de sécurité à trois points selon la revendication 7,
**caractérisé en ce que** les rouleaux de renvoi (20) sont agencés de manière répartie sur la surface de renvoi (18).

9. Système de ceinture de sécurité à trois points selon l'une des revendications 5 à 8,
**caractérisé en ce qu'**il est prévu au total deux ou trois rouleaux de renvoi (20) sensiblement parallèles les uns aux autres.

10. Système de ceinture de sécurité à trois points selon l'une des revendications précédentes,
**caractérisé en ce qu'**il est prévu des paliers coulissants respectifs (15, 16) pour le montage des rouleaux de guidage latéraux (10) et/ou des rouleaux de renvoi (9).

11. Système de ceinture de sécurité à trois points selon l'une des revendications précédentes,
**caractérisé en ce que** les rouleaux de renvoi (9) et les rouleaux de guidage latéraux (10) sont montés dans une pièce en matière plastique, laquelle est susceptible d'être montée à la manière d'une enveloppe sur une partie en forme d'étrier (11), réalisée de préférence en métal.

12. Système de ceinture de sécurité à trois points selon la revendication 11,
**caractérisé en ce que** les paliers (15, 16) des rouleaux de renvoi (9) et des rouleaux de guidage latéraux (10) sont susceptibles d'être recouverts par au moins une partie de couverture (17), de préférence encliquetable.

13. Système de ceinture de sécurité à trois points selon l'une des revendications précédentes,
**caractérisé en ce que** les surfaces enveloppe des rouleaux de renvoi (9, 20) et/ou des rouleaux de guidage latéraux (10) sont réalisées de manière lisse.

14. Système de ceinture de sécurité à trois points selon l'une des revendications 1 à 12,
**caractérisé en ce que** les surfaces enveloppe des rouleaux de renvoi (9, 20) et/ou des rouleaux de guidage latéraux (10) sont structurées.
